# FASCICULE DE BREVET EUROPEEN

(11) **EP 0 633 201 B1**
(45) Date de publication et mention de la délivrance du brevet: **18.01.1995**
(21) Numéro de dépôt: 93810477.5
(22) Date de dépôt: 06.07.1993
(51) Int. Cl.: B65D 85/10, B65D 5/54, B65D 5/02

(54) **Emballage pour cigarettes comportant plus d'un moyen d'ouverture**
Mit mehr als einer Öffnungsmöglichkeit versehene Zigarettenverpackung
Cigarettes package provided with more than one opening means

(43) Date de publication de la demande: 11.01.1995
(73) Titulaire: FABRIQUES DE TABAC REUNIES S.A., 2003 Neuchâtel-Serrières (CH)
(72) Inventeur: Sigrist, Albert, CH-2013 Colombier (CH); Rizzolo, Roberto, CH-2149 Champ du Moulin (CH)
(74) Mandataire: Fischer, Franz Josef

(56) Documents cités:
- DE-U- 1 883 769
- FR-A- 1 033 267
- FR-A- 2 130 640
- FR-A- 2 261 186
- US-A- 2 026 477
- US-A- 2 285 188
- US-A- 5 139 140

## Description

La présente invention concerne un emballage pour paquet de produits de l'industrie du tabac, notamment pour paquets de cigarettes, constitué en une seule feuille, respectivement à partir d'une seule étiquette, et comportant au moins deux moyens d'ouverture permettant ainsi de multiplier les modes d'utilisation dudit emballage, ainsi qu'une étiquette permettant de réaliser un tel emballage.

Pour les paquets de cigarettes selon l'art antérieur, on trouve généralement deux types d'emballages. Un premier type d'emballage est l'emballage dur ou "box" dont l'élément principal est constitue à partir d'une étiquette découpée dans une feuille de carton mince. Un emballage de ce type comprend généralement une partie de fond et une partie de couvercle, pivotante par rapport à la précédente, permettant d'ouvrir et de refermer le paquet. Ce type de paquet a l'avantage d'être relativement rigide et ainsi protège bien les cigarettes qu'il contient. Un deuxième type d'emballage est l'emballage mou ou "soft" dont l'élément principal est constitué à partir d'une étiquette découpée dans une feuille de papier mince. Un emballage de ce type comprend généralement une languette de déchirure permettant de déchirer et de retirer une portion dudit emballage afin de pouvoir accéder aux cigarettes; il n'est généralement pas possible de refermer le paquet. Si cet emballage consomme moins de matière première que le précédent, étant constitué d'une feuille de papier au-lieu d'une feuille de carton, il est moins rigide et protège moins bien les cigarettes qu'il contient. Les deux types d'emballage ci-dessus sont, dans l'art antérieur, complétés d'une pluralité de couches de matériaux différents; tout d'abord les cigarettes sont entourées d'une mince feuille composite comportant une face aluminisée, ensuite de quoi le paquet ainsi constitué est introduit dans un emballage dur ou mou comme décrit ci-dessus, ce dernier emballage étant ensuite recouvert d'une feuille transparente, généralement en acétate, en cellophane ou en polypropylène. Ces trois couches physiques ont chacune une fonction particulière, la feuille aluminisée étant opaque et devant protéger les cigarettes de la lumière, la couche de papier ou de carton mince devant assurer le maintien du paquet et comportant sur ses faces extérieures des impressions de la marque et autres indications, alors que la dernière couche transparente est scellée afin d'assurer l'étanchéité du paquet et de préserver l'humidité, l'arôme et le goût des cigarettes.

Les paquets de l'art antérieur décrits ci-dessus comportent une série d'inconvénients: tout d'abord lors de la fabrication du paquet, la nécessité de devoir disposer successivement plusieurs couches superposées de matériaux différents nécessite des machines complexes, ensuite l'utilisateur doit déchirer, ouvrir ou séparer trois couches avant de parvenir aux cigarettes. De plus un emballage comportant ces diverses couches est coûteux en matières premières pour sa fabrication et reste coûteux pour son élimination puisque composé d'un assemblage de plusieurs matériaux qui ne peuvent être éliminés par les mêmes voies, c'est-à-dire qu'ils ne sont pas recyclables, de plus certains d'entre eux ne pouvant pas être formés à partir de matériaux biodégradables.

Un autre inconvénient des paquets de l'art antérieur réside dans le fait que ceux-ci ne comportent qu'une seule possibilité d'ouverture, déterminée généralement par le type d'emballage considéré, comme décrit plus haut. Il peut être avantageux pour l'utilisateur de pouvoir choisir le type d'ouverture qu'il préfère, lui permettant en particulier de saisir les cigarettes sans devoir en toucher le bout filtre, ou alors, s'il possède par exemple un étui rechargeable approprié, de pouvoir ouvrir son paquet de telle manière qu'il puisse être utilisé en combinaison avec cet étui.

L'emballage décrit dans FR-A-2.130.640 est du type conventionnel décrit plus haut, soit ne comportant qu'un seul moyen d'ouverture d'une portion de la face supérieure. Une des formes d'exécution de FR-A-1.033.267 montre un emballage comportant deux moyens d'ouverture identiques disposés aux deux extrémités opposées de la face supérieure, sans qu'un avantage quelconque en ressorte pour l'utilisateur. L'emballage de DE-U-1.883.769 comporte deux moyens d'ouverture identiques disposés permettant d'ouvrir le paquet dans un sens ou dans l'autre; un tel emballage est une solution qu'à un seul des problèmes posés précédemment. La conception de l'emballage selon US-A-2.026.477 diffère encore de ce qui a été décrit jusqu'ici, dans la mesure où l'emballage peut être ouvert, par le même moyen d'ouverture, en deux temps afin d'atteindre premièrement les premières cigarettes puis ensuite celles restant dans le paquet. L'emballage selon US-A-5.139.140 est un emballage box, constitué, de manière conventionnelle, d'une pluralité de feuilles superposées et comportant deux moyens d'ouverture de types différents; il est bien connu de l'homme du métier que les emballages de type box sont conçus de manière très différente de ceux de type mou ou soft comme dans l'invention. D'autre part, aucun des emballages ci-dessus ne tente de résoudre le problème de diminuer le nombre de couches superposées nécessaires, ce qui conduit notamment à un gaspillage de matières premières et des difficultés d'élimination des déchets produits par ces emballages.

Un premier but de l'invention est donc d'obtenir un emballage pour paquet de cigarettes ou autres produits de l'industrie du tabac ne comportant pas les inconvénients mentionnés des emballages de l'art antérieur, soit étant constitué d'une feuille unique d'emballage, de préférence recyclable et/ou biodégradable, et répondant néanmoins aux exigences d'imperméabilité à la lumière, de maintien du paquet en forme, et de maintien de l'humidité interne, de l'arôme et du goût des cigarettes.

Un deuxième but de l'invention est d'obtenir un emballage comportant plus d'un moyen d'ouverture, c'est-à-dire permettant à l'utilisateur de choisir le mode d'utilisation de son paquet.

Un autre but de l'invention est d'obtenir un emballage produisant le minimum de déchets, tant à la fabrication qu'à l'utilisation et utilisant le minimum de matière première pour sa fabrication.

Ces différents buts sont atteints par un emballage comprenant les caractéristiques mentionnées dans les revendications 1 à 3, à partir d'une étiquette conforme aux revendications 4 à 18, une manière d'utiliser une forme d'exécution particulière dudit emballage étant décrite à la revendication 19.

L'invention est expliquée plus en détails ci-dessous en regard du dessin annexé comportant les figures où:
la figure 1 représente schématiquement une forme d'exécution préférentielle d'un paquet de cigarette selon l'invention, terminé à l'état fermé,
la figure 2 représente le même paquet de cigarettes ouvert selon une des possibilités d'ouverture,
la figure 3A représente le même paquet de cigarettes ouvert selon une autre possibilité d'ouverture,
la figure 3B représente le paquet de cigarettes de la figure 3A introduit dans un étui extérieur rigide,
la figure 4 représente une première forme d'exécution d'une étiquette d'emballage selon l'invention,
les figures 5A à 5D représentent quatre formes d'exécution de découpes d'une étiquette d'emballage,
la figure 6 représente une vue par dessus d'un paquet de cigarettes constitué à partir d'une étiquette selon la forme d'exécution de la figure 4,
la figure 7 représente une forme d'exécution de moyens d'ouverture,
la figure 8 représente une autre forme d'exécution de moyens d'ouverture,
la figure 9 représente une autre forme d'exécution d'une étiquette d'emballage selon l'invention,
la figure 10 représente une vue par dessus d'un paquet de cigarettes constitué à partir d'une étiquette selon la forme d'exécution de la figure 9,
la figure 11 représente une autre forme d'exécution d'une étiquette d'emballage selon l'invention,
la figure 12 représente une vue par dessus d'un paquet de cigarettes constitué à partir d'une étiquette selon la forme d'exécution de la figure 11,
la figure 13 représente une autre forme d'exécution d'une étiquette d'emballage selon l'invention,
la figure 14 représente une vue par dessus d'un paquet de cigarettes constitué à partir d'une étiquette selon la forme d'exécution de la figure 13.
la figure 15 représente encore une autre forme d'exécution d'une étiquette d'emballage selon l'invention,
la figure 16 représente une vue par dessus d'un paquet de cigarettes constitué à partir d'une étiquette selon la forme d'exécution de la figure 15,
la figure 17 représente encore une autre forme d'exécution d'une étiquette d'emballage selon l'invention, et
la figure 18 représente une vue par dessus d'un paquet de cigarettes constitué à partir d'une étiquette selon la forme d'exécution de la figure 17.

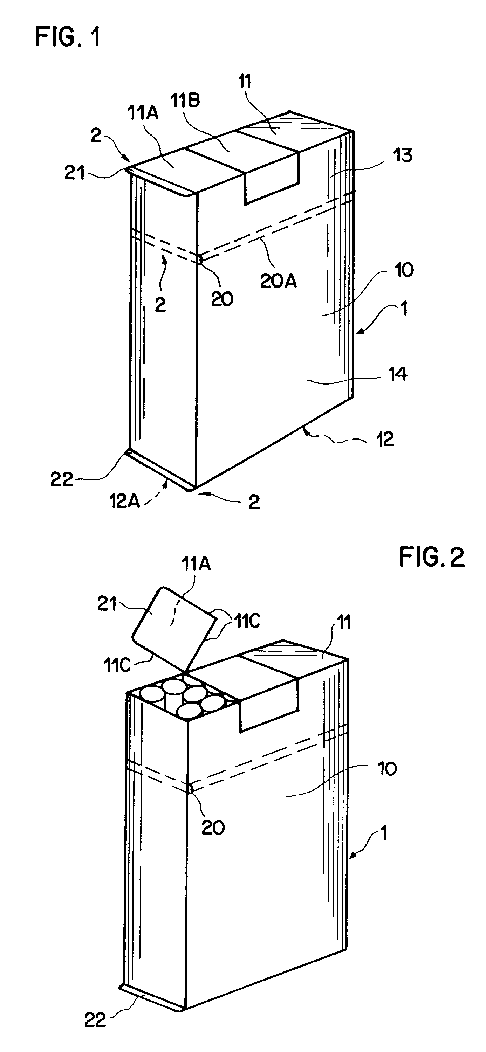

Le paquet de cigarettes 1 de la figure 1 est constitué d'une seule feuille d'emballage ou étiquette 10; il est représenté ici à l'état terminé et fermé. Les moyens d'ouverture 2, disponibles pour l'ouverture du paquet 1 comprennent ici une première languette 20 permettant de déchirer ou arracher une bandelette d'arrachage périphérique 20A disposée sur les faces frontales et latérales du paquet et définie par une ou deux lignes d'ouverture confectionnées comme on le verra plus bas, afin d'en séparer une portion supérieure 13 de la portion inférieure 14, une deuxième languette 21 permettant de déchirer une portion 11A de la face d'extrémité superieure 11 du paquet et une troisième languette 22 disposée de la même manière et symétriquement à la précédente et permettant de déchirer une portion 12A de la face d'extrémité inférieure 12 du paquet 1 par d'autres lignes d'ouverture. Le paquet de cigarettes terminé est généralement muni d'une étiquette de garantie 11B.

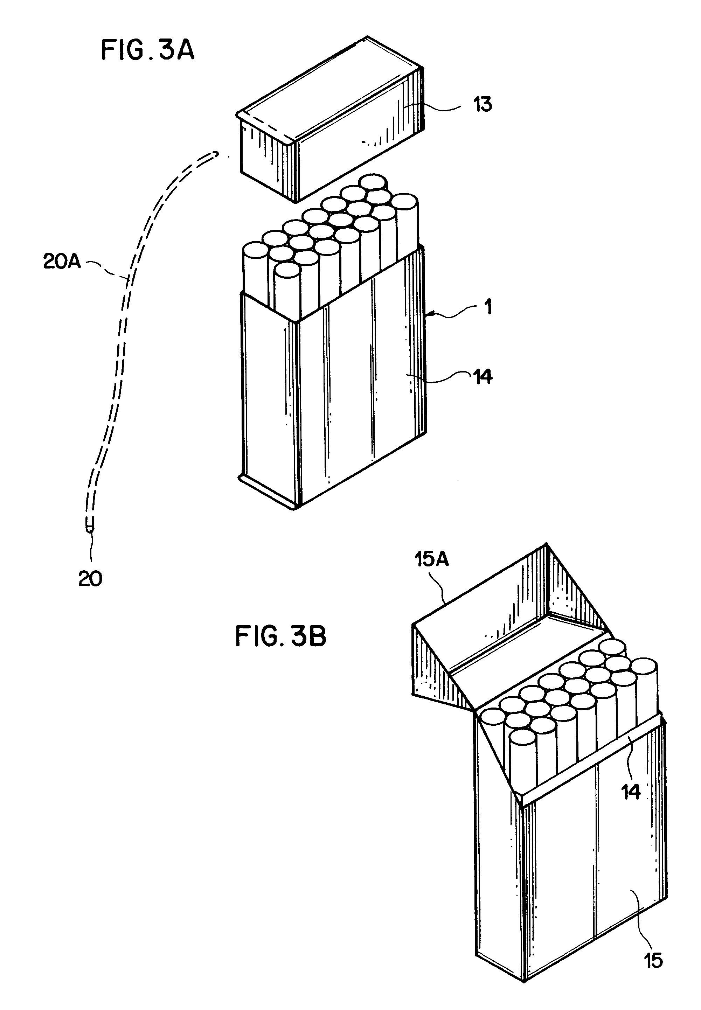

L'utilité pour l'utilisateur de la présence de multiples moyens d'ouverture 2 est expliquée ci-dessous en regard des figures 2, 3A et 3B.

Le paquet 1 de la figure 2 a été ouvert en agissant sur la languette 21, de manière à déchirer et arracher la portion 11A de la face supérieure 11 du paquet. Ce mode d'ouverture correspond généralement à celui utilisé pour un paquet mou habituel. Des amorces de déchirure 11C le long de lignes d'ouverture, ont été prévues sur le pourtour de la portion 11A, permettant de facilement retirer la portion 11A en effectuant une traction sur la languette 21. De cette manière, vu que l'emballage est constitué de la seule étiquette 10, les cigarettes sont directement accessibles, sans qu'il soit nécessaire de retirer d'autres portions d'autres couches d'emballage. Vu que dans le cas de cigarettes à bout filtre, celles-ci sont disposées dans le paquet 1 avec le filtre dirigé vers le haut du paquet, un fumeur travaillant sur un chantier ou une machine et ayant les doigts sales, peut alors choisir de tirer sur la languette 22, à la place de la languette 21, pour arracher la portion 12A de la face inférieure 12 du paquet afin qu'en saisissant une cigarette par son extrémité opposée au filtre, il ne risque pas de tacher une portion de la cigarette qu'il doit ensuite mettre en bouche. Un paquet ouvert selon ce deuxième mode d'ouverture n'est pas directement représenté, mais il se comprend facilement puisque le paquet 1 est alors simplement inversé par rapport à celui représenté sur la figure 2.

L'utilisation de l'ouverture du paquet par la languette 20 est représentée aux figures 3A et 3B. En exerçant une traction sur la languette 20, l'utilisateur déchire et arrache la bandelette d' d'arrachage 20A qui suit le pourtour du paquet 1, séparant celui-ci en une portion supérieure 13 et une portion inférieure 14 qui contient les cigarettes. La portion supérieure 13 ainsi que la bandelette d'arrachage 20A peuvent être jetées. Le paquet ouvert tel qu'il se présente à la figure 3A peut être utilisé tel quel, mais de préférence il sera introduit comme une recharge dans un étui ou boitier externe 15, comportant une fermeture représentée en 15A à titre d'exemple, de manière à ce que les cigarettes soient mieux protégées. Le boîtier externe 15 est de préférence réutilisable, il peut par exemple être en carton, en matériau synthétique, en métal ou en n'importe quel matériau convenable; de cette manière, l'utilisateur en achetant un paquet de cigarettes de type mou, bénéficie des avantages d'un paquet de type dur, sans l'inconvénient d'un gaspillage de matière première. Le boîtier externe 15 peut comporter une représentation de la marque de cigarette ou alors une décoration absolument différente.

Le paquet de cigarettes comporte avantageusement les trois moyens d'ouverture décrits ci-dessus, mais il est évident qu'il peut aussi n'en comporter que deux, par exemple ceux constitués par les deux languettes 21 et 22 ou l'une des languettes 21 ou 22 et la languette 20. Les possibilités d'ouverture par l'utilisateur seront donc limitées en conséquence.

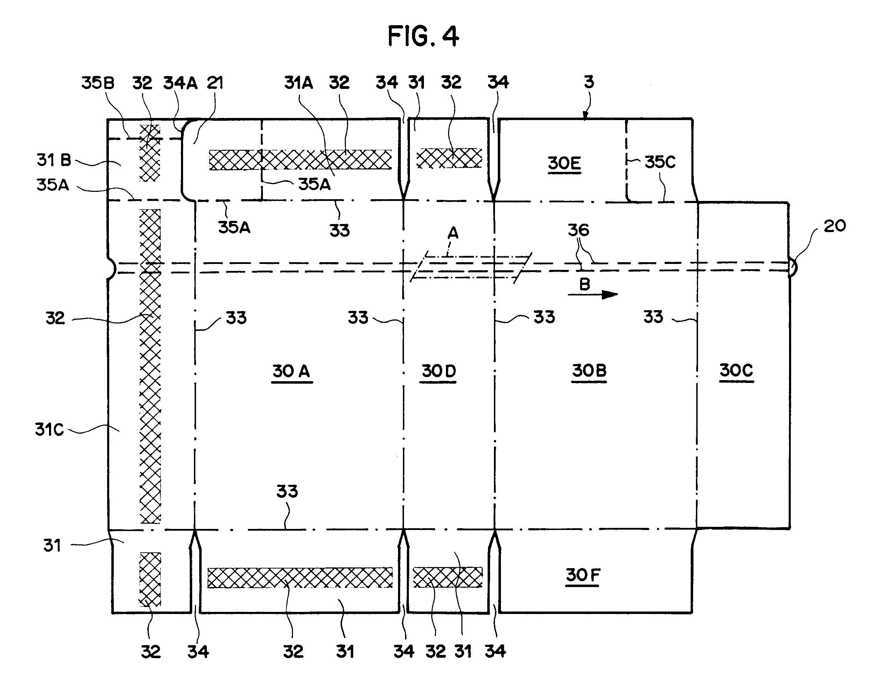

La figure 4 montre une première forme d'exécution d'une étiquette 3 selon l'invention permettant de réaliser, par des pliages à plat, un emballage de paquet de cigarettes selon l'invention comme décrit précédemment. L'étiquette 3 est constituée en une seule feuille, de préférence à partir d'une feuille de papier mince, mais pouvant aussi être en un autre matériau, par exemple un matériau synthétique mince ou un assemblage composite; de préférence le matériau utilisé sera facilement éliminable, étant recyclable ou alors biodégradable. Il est aussi possible d'utiliser une feuille de papier mince, laminée et/ou laquée, sur une ou sur les deux faces de l'étiquette, ces opérations de laminage et/ou de laquage pouvant être effectuées avant ou après la découpe des étiquettes et la confection des lignes d'ouverture et des nervures de pliage comme décrites ci-dessous. On obtient ainsi un emballage de type mou, mais rien n'empêche que l'étiquette 3 soit constituée à partir d'une feuille relativement rigide, permettant d'obtenir un emballage ressemblant à un emballage de type dur. L'étiquette 3 est découpée à partir d'une feuille de grandes dimensions ou alors découpée sur une bande dont la largeur correspond soit à la largeur, soit à la longueur de l'étiquette. Vu que l'emballage ne comporte qu'une seule couche, l'étiquette 3 doit être suffisamment opaque à la lumière afin d'en protéger les cigarettes, ce qui permet d'éviter la couche de papier aluminisé. L'étiquette 3 est composée, comme déjà connu, d'une pluralité de panneaux destinés à former les faces du paquet, soit les panneaux frontaux 30A et 30B destinés à former respectivement les faces frontales avant et arrière, les panneaux latéraux 30C et 30D destinés à former respectivement les faces latérales avant et arrière et les panneaux de couverture 30E et 30F destinés à former respectivement les faces de couverture supérieure et inférieure. L'étiquette est complétée par une pluralité de panneaux de collage, 31, 31A, 31B et 31C comportant les zones de collage 32 nécessaires à la fermeture du paquet après assemblage. On remarque sur cette forme d'exécution de l'étiquette 3 que les panneaux devant constituer les coins supérieurs et inférieurs droits sont supprimés; cette manière de faire diminue le poids de l'emballage vide mais par contre nécessite un outillage de coupe plus compliqué. Rien n'empêcherait de conserver ces coins, de la même manière que sur les formes d'exécution qui seront décrites ultérieurement. Des lignes de pliage 33 sont confectionnées par un outillage connu lors de la découpe de l'étiquette 3, sous forme d'une moulure facilitant la formation du pli entre les différents panneaux lors de l'assemblage du paquet. Ces lignes de pliage 33 limitent les différents panneaux mentionnés plus haut qui ne sont pas séparés par une découpe comme indiqué ci-après. Des découpes 34, 34A séparent les panneaux de couverture des panneaux de collage et ceux-ci entre eux afin de permettre le pliage à plat desdits panneaux et l'assemblage du paquet. La découpe 34A séparant les panneaux de collage 31A et 31B destinés à venir se positionner sous le panneau de couverture supérieur 30E, est de forme particulière puisqu'elle empiète sur le panneau de collage 31B, afin de former une première saillie, restant attenante au panneau de collage 31A, et correspondant à la languette d'arrachage 21 des figures 1 et 2. Une autre saillie sur une arête du panneau latéral avant 30C, découpée dans une portion d'une arête latérale du panneau de collage opposé 31C, correspond à la languette d'arrachage 20 des figures 1, 2 et 3A. Une première ligne d'ouverture 35A est aménagée en regard de la première saillie, correspondant à la languette d'arrachage 21, cette ligne d'ouverture 35A s'étendant de manière à pouvoir séparer les panneaux de collage 31B et 31C, puis sur une partie de la ligne de pliage 33 séparant les panneaux 30A et 31A, puis s'étendant transversalement au panneau de collage 31A; le panneau de collage 31B peut comporter une autre ligne d'ouverture 35B qui juxtaposera la dernière partie mentionnée de la ligne d'ouverture 35A lorsque le panneau 31A sera rabattu sur le panneau 31B. Une autre ligne d'ouverture 35C est aménagée sur la portion opposée du panneau 30E afin de correspondre à la ligne 35A lorsque le panneau 30E sera superposé au panneau 31A. Les lignes d'ouverture 35A, 35B et 35C mentionnées ci-dessus correspondent aux amorces de déchirure 11C du paquet terminé, comme représentées sur la figure 2.

Une autre ligne d'ouverture 36, constituée ici de deux lignes parallèles et faiblement espacées est aménagée depuis la saillie 20, à travers les panneaux 30C, 30B, 30D, 30A et 31C définissant les faces frontales et latérales du paquet de cigarettes et correspondent aux lignes d'ouverture de la bandelette d'arrachage 20A de la figure 3A. En variante, il est aussi possible que la ligne d'ouverture 36 ne soit constituée que d'une seule ligne faisant office de bordure inférieure de la partie supérieure 13 du paquet et permettant son arrachage lorsque l'utilisateur tire sur la languette 20.

Après assemblage d'une manière connue, par rabattement des panneaux autour des lignes de pliage et collage par les zones de collage, on obtient le paquet de cigarettes 1 terminé comme représenté sur la figure 1, à l'exception du fait que l'exemple d'étiquette 3 décrite ci-dessus ne comporte pas la saillie permettant de confectionner la languette d'arrachage 22, mais il serait très facile d'aménager la configuration des panneaux de couverture inférieurs de la même manière que décrite pour les panneaux supérieurs afin d'avoir cette languette 22.

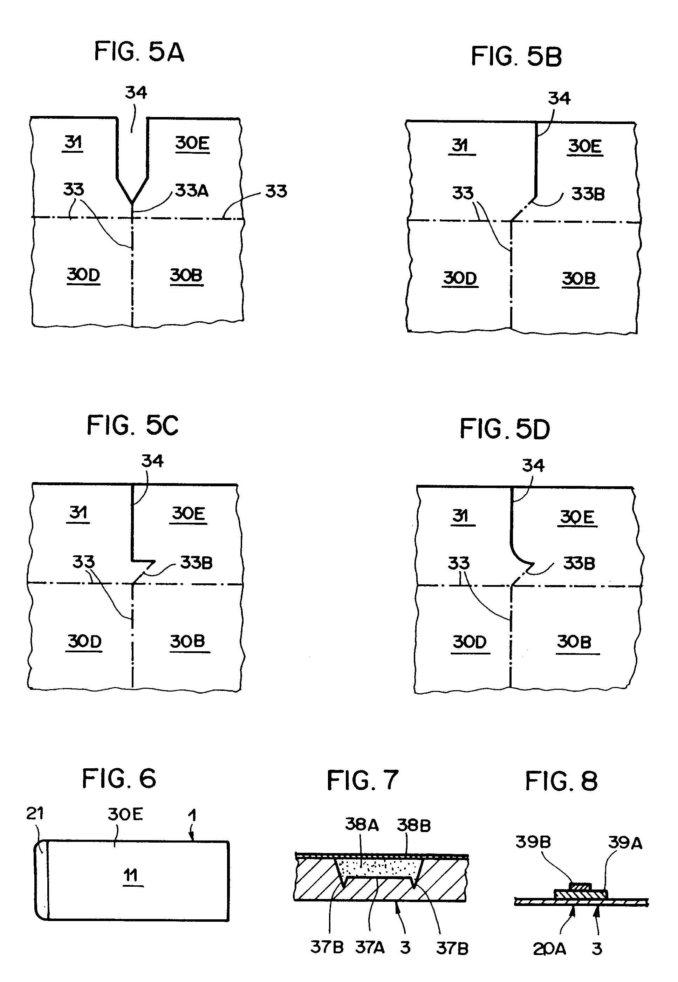

Vu que, comme mentionné précédemment, il est important que l'emballage du paquet de cigarettes soit étanche, et vu que ledit emballage est constitué d'une seule feuille mince, des précautions particulières doivent être apportées dans la formation des coins du paquet, constitués des points de jonction d'une découpe sur une ligne de pliage, pour la forme d'exécution représentée ici de l'étiquette 3; un coin de paquet constitué de cette manière n'étant généralement pas absolument étanche. Pour améliorer ceci, il est possible de former spécialement les découpes 34 de la figure 4 selon l'une ou l'autre des manières représentées aux figures 5A à 5D. En considérant par exemple la découpe 34 séparant les panneaux supérieurs 31 et 30E, la découpe 34 selon la forme d'exécution de la figure 5A ne va pas jusqu'à la ligne de pliage 33 comme représenté sur la figure 4, mais s'arrête avant cette ligne de pliage, la portion restante étant complétée d'une amorce de ligne de pliage 33A en prolongement de celle séparant les panneaux latéraux 30D et 30B. Dans la forme d'exécution de la découpe 34 représentée à la figure 5A, celle-ci est composée en fait de deux lignes de découpe parallèles empiétant sur chacun des panneaux 31 et 30E, les extrémités des lignes de découpe se rejoignant à l'extrémité de l'amorce de ligne de pliage 33A. Il serait tout aussi possible d'avoir une seule ligne de découpe dans l'alignement de l'amorce de la ligne de pliage 33A. La figure 5B montre une variante de l'exemple de découpe 34 de la figure 5A, où la découpe 34 n'est faite que sur un seul des panneaux, ici le panneau 30E, selon une ligne parallèle à la ligne idéale séparant les deux dits panneaux, cette découpe 34 étant complétée d'une amorce de ligne de pliage 33B à 45° rejoignant le point d'intersection des lignes de pliage 33. La découpe 34 selon les formes d'exécution des figures 5C et 5D est faite dans le prolongement de la ligne de pliage séparant les deux panneaux 30B et 30D et est faite seulement sur une portion de la largeur des panneaux 31 et 30E, et se termine par une portion de découpe à 90° ou en arrondi. Dès l'extrémité de cette portion de découpe à 90° ou en arrondi, on a une amorce de ligne de pliage 33B à 45° qui rejoint le point d'intersection des lignes de pliage 33. Lors de l'assemblage du paquet, constitué à partir d'une étiquette comportant des découpes selon l'une ou l'autre de ces variantes, il se formera un pli en diamant sur l'amorce de la ligne de pliage 33A, respectivement 33B, ce qui assurera l'étanchéité de ce coin du paquet. Les exemples décrits ci-dessus l'ont été par rapport au coin défini par les panneaux 30B, 30D, 30E et 31; il est évident que les autres coins du paquet peuvent et seront de préférence aussi découpés selon l'une de ces formes d'exécution afin d'assurer l'étanchéité totale du paquet.

Une fois assemblé à partir d'une étiquette 3 comme décrite ci-dessus, le paquet 1 a ses faces supérieures et inférieures 11 et 12 formées d'un panneau complet, respectivement les panneaux 30E et 30F, comme on le voit sur la figure 6 qui représente un paquet 1 vu par dessus. Selon la forme d'exécution représentée, le panneau 30E recouvre le panneau 31A auquel la languette 21 est attachée afin de faciliter l'ouverture du paquet; toutefois rien n'empêcherait que le panneau 31A recouvre le panneau 30E. Une vue par dessous du même paquet serait absolument semblable.

Pour les mêmes raisons d'étanchéité que mentionnées précédemment, des précautions particulières sont à apporter à la confection des lignes d'ouverture 35A, 35B, 35C et 36 définissant les portions du paquet à arracher lors de son ouverture. Vu la faible épaisseur de la feuille constituant l'étiquette 3, il est généralement difficile de confectionner une ligne d'ouverture par découpe d'une portion seulement de l'épaisseur de la feuille. Selon une première forme d'exécution des lignes d'ouverture, celles-ci seront constituées de découpes ponctuelles, chacune étant suivie d'une zone non découpée. Dans ce cas, et afin d'assurer l'étanchéité du paquet, après que les découpes ponctuelles aient été effectuées, celles-ci doivent être recouvertes d'un enduit étanche. Pour ceci on peut soit laminer une feuille de recouvrement mince sur les découpes ponctuelles ou sur l'ensemble de l'étiquette 3, soit recouvrir les découpes ponctuelles d'une légère couche de cire, soit alors s'arranger pour que le motif ou l'inscription de la marque de cigarette devant venir s'imprimer sur les faces extérieures du paquet soit constituée d'une encre ayant un bon pouvoir couvrant et recouvre entièrement les découpes ponctuelles, comme représenté par exemple en A pour une portion des lignes d'ouverture 36 sur la figure 4. En fait, il n'est pas absolument nécessaire que toutes les lignes d'ouverture effectuées dans des portions de panneaux destinés à se superposer à l'assemblage soient étanches, il suffit que la ligne d'ouverture effectuée sur une desdites couches le soit.

Selon une autre forme d'exécution des lignes d'ouverture, il est possible de les supprimer en prenant la précaution d'orienter l'étiquette 3 selon la direction des fibres du papier constituant ladite étiquette. Au cas où toutes ou la majorité des fibres sont orientées horizontalement, soit selon la direction représentée en B en se référant à la figure 4, les lignes d'ouverture 35B et 36 ainsi que les parties horizontales des lignes de prédécoupe 35A et 35C peuvent être supprimées, le papier n'offrant que peu de résistance à l'arrachage selon cette direction lorsque l'utilisateur tirera sur l'une ou l'autre des languettes d'arrachage. En ce qui concerne les portions des lignes d'ouverture 35A et 35C disposées perpendiculairement à l'orientation des fibres, ces portions de lignes peuvent être remplacées par des lignes de pliage, ce qui facilitera leur arrachage. Les lignes d'ouverture peuvent aussi être confectionnées d'une manière assez semblable aux nervures de pliage, comme on le voit à la figure 7 qui représente une ligne d'ouverture établie dans l'épaisseur représentée de manière fortement agrandie d'une étiquette 3. Par le passage d'une molette effectuant un écrasement partiel 37A de l'épaisseur de l'étiquette 3, suivi du passage de un ou deux couteaux rotatifs effectuant au moins une diminution d'épaisseur supplémentaire 37B de l'épaisseur de l'étiquette, on obtient une ou deux lignes d'ouverture de faible résistance qu'il sera facile d'arracher. Le ou les couteaux rotatifs peuvent aussi faire partie de l'outil de moletage, la confection de la ligne d'ouverture se faisant alors en une seule opération. Des lignes d'ouverture établies selon l'une des deux dernières manières qui viennent d'être décrites ne nécessitent aucune précaution particulière pour assurer leur étanchéité vu que l'étiquette 3 n'est pas traversée par des perforations.

La ou les lignes d'ouverture établies comme représenté à la figure 7 peuvent être faites sur la face de l'étiquette 3 correspondant à l'intérieur du paquet ou sur celle correspondant à l'extérieur du paquet; dans ce dernier cas, la ligne creuse créée par le moletage sera de préférence remplie d'un enduit 38A, de préférence laminé, une couche laquée 38B pouvant encore être disposée sur la surface de l'étiquette afin de la rendre parfaitement plane.

Encore une autre forme d'exécution des lignes d'ouverture est représentée à la figure 8, où on a une portion vue en coupe d'une étiquette 3 dans la région d'une bandelette d'arrachage, par exemple la bandelette d'arrachage 20A des figures 1 ou 3A. Sur la face de l'étiquette 3 qui sera tournée vers l'intérieur du paquet, une bande collante 39A est collée de manière à suivre la ligne d'ouverture, une bande de traction 39B constituée en un matériau possédant une relativement grande résistance de rupture étant superposés à la bande collante 39A. L'extrémité de la bande de traction 39B peut être aménagée afin de former la languette 20. En tirant sur cette languette puis sur la bande de traction, on ouvre le paquet tout au long de cette bande de traction. L'étiquette 3 peut être munie ou non de une ou plus de lignes prédécoupées disposées le long de ladite bande collante, cette dernière assurant l'étanchéité de l'emballage. La bande collante 39A ainsi que la bande de traction 39B seront aussi de préférence en matériaux recyclables et/ou biodégradables.

Les diverses formes d'exécution des lignes d'ouverture décrites ci-dessus peuvent évidemment être combinées entre elles, certaines d'entre elles étant mieux adaptées à l'un ou l'autre type de moyens d'ouverture de l'emballage.

Les zones de collage 32 représentées sur la figure 4 ne le sont qu'à titre d'exemple; leurs formes, emplacements et dimensions peuvent varier selon la forme d'exécution de l'étiquette, l'homme du métier sachant les adapter afin d'obtenir la meilleure tenue du paquet assemblé. Ces zones de collage ne sont plus représentées sur les formes d'exécution de l'étiquette qui suivent, mais il est bien entendu que chacune d'entre elles comporte de telles zones. Selon le matériau utilisé pour l'étiquette ou recouvrant celle-ci, il est aussi possible de remplacer les zones de collage par des zones auto-scellantes ou scellantes sous l'effet de la température et/ou d'une pression qui leur est appliquée.

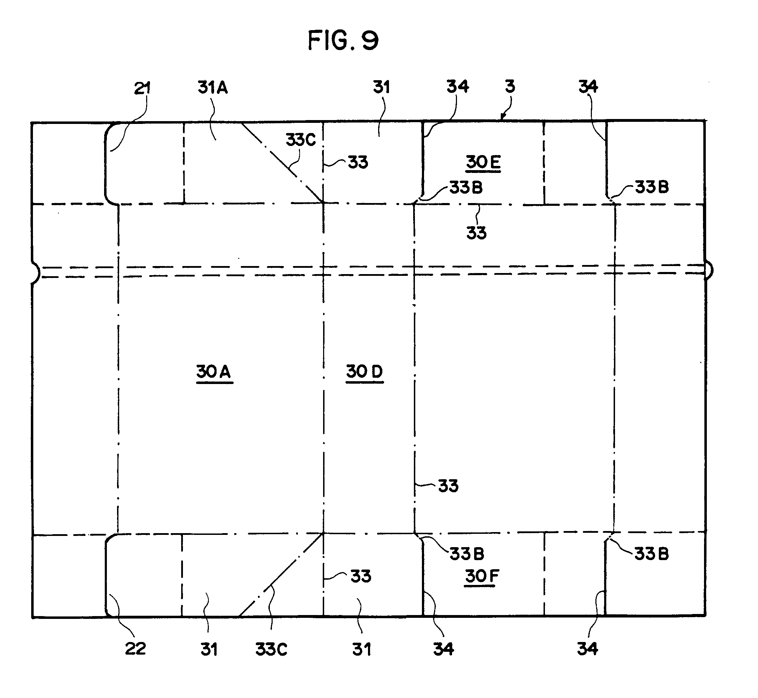

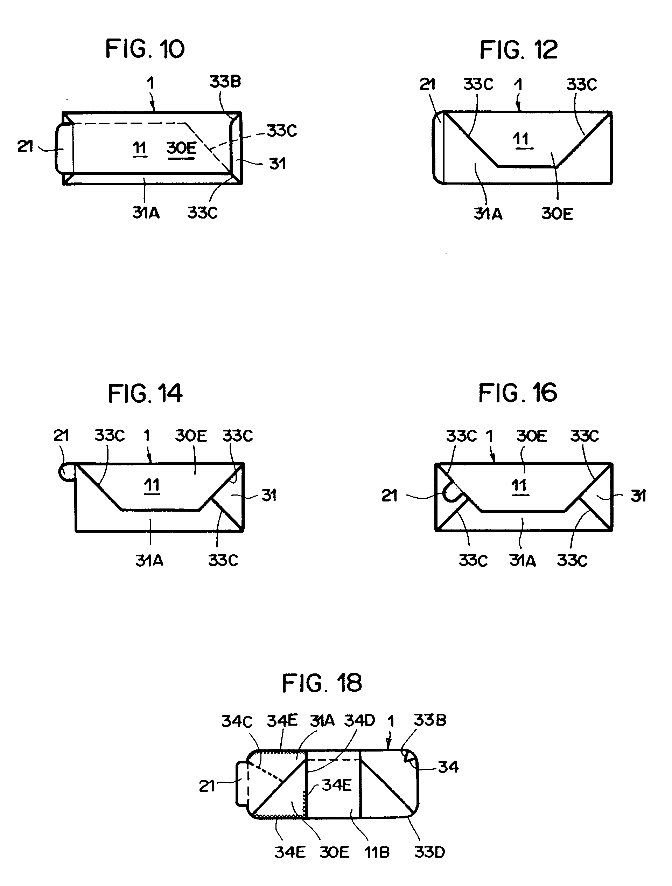

L'étiquette 3 de la figure 9 est une autre forme d'exécution de l'étiquette décrite plus haut, permettant de réaliser l'emballage par une combinaison de pliages à plat et de pliages en diamant. Elle est constituée généralement des mêmes panneaux que la précédente forme d'exécution d'étiquette décrite, les panneaux des coins supérieurs et inférieurs droits étant ici représentés, toutefois sans qu'ils soient absolument nécessaires. Cette forme d'exécution comporte en outre une deuxième saillie attenante au panneau de collage inférieur 31, destinée à former la languette d'arrachage inférieure 22. Les différences principales entre les deux formes d'exécution concernent la manière dont sont faites les découpes entre les panneaux de couverture supérieure 30E, respectivement inférieure 30F et les panneaux de collage 31 ou 31A qui leurs sont adjacents. Tout d'abord les découpes 34 disposées de part et d'autre des panneaux 30E et 30F sont faites selon la forme d'exécution décrite en regard de la figure 5B, c'est-à-dire comprennent une amorce de ligne de pliage à 45° 33B depuis l'extrémité de la découpe jusqu'à l'intersection des lignes de pliage 33. De plus, les panneaux de collage 31 ou 31A, adjacents aux panneaux frontal 30A et latéral 30D ne sont plus séparés par une découpe, mais restent reliés par une ligne de pliage 33, destinée à être pliée en sens inverse des autres lignes de pliage décrites jusqu'ici. En complément à ceci, deux autres lignes de pliage à 45° 33C, traversant la largeur des panneaux 31A et 31, permettent le pliage en diamant des coins sur lesquels se rencontrent ces différentes lignes de pliage. Une telle forme d'exécution d'étiquette permet de confectionner un paquet ayant une meilleure étanchéité que celui confectionné avec une étiquette selon la forme d'exécution précédente. Vu de dessus, un paquet terminé avec une étiquette selon cette deuxième forme d'exécution a l'allure représentée à la figure 10. Le panneau 30E formant la face supérieure 11 a été représenté avec une largeur plus faible que celle du paquet 1 afin de montrer partiellement les couches inférieures repliées.

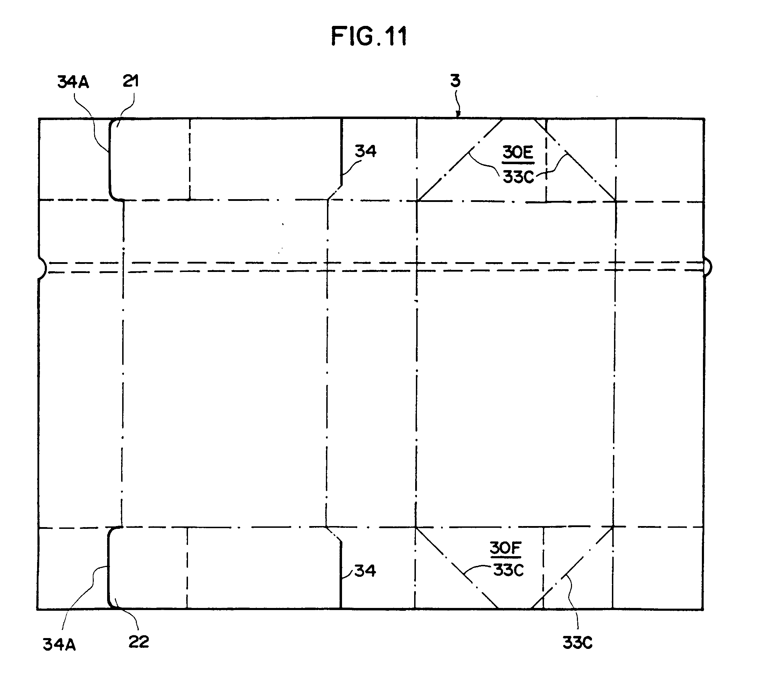

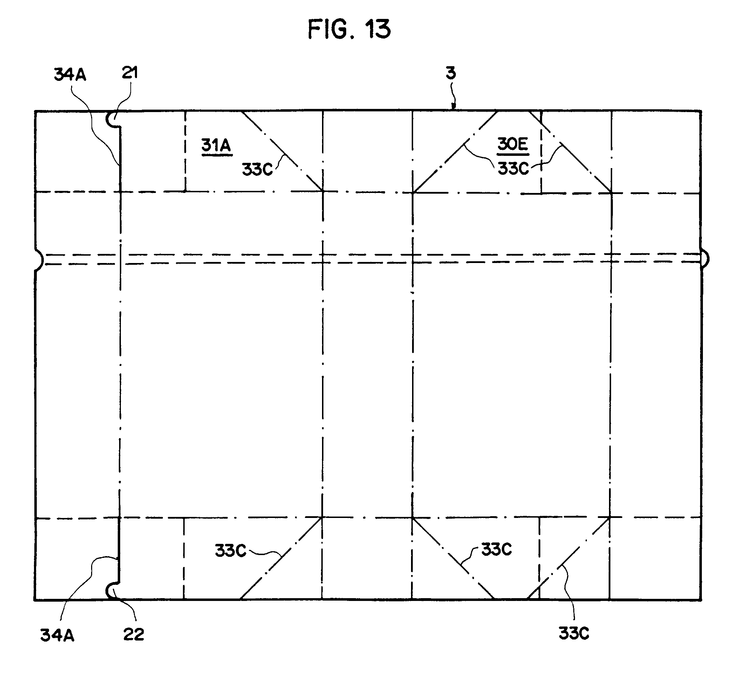

La figure 11 montre une autre forme d'exécution de l'étiquette 3 où, par rapport à la forme d'exécution de la figure 9, les lignes de pliage 33C à 45° sont reportées sur les panneaux de couverture supérieur 30E et inférieur 30F permettant de réaliser davantage de plis en diamant. Dans ce cas, les découpes 34 subsistent entre les panneaux de collage. Lorsqu'il est terminé, le paquet vu de dessus est semblable à celui représenté à la figure 12. L'avantage de cette forme d'exécution de l'étiquette réside dans le fait que lors de l'assemblage du paquet on rencontre moins de couches superposées pour la formations des faces supérieure et inférieure du paquet, ce qui en facilite le collage ou le scellement.

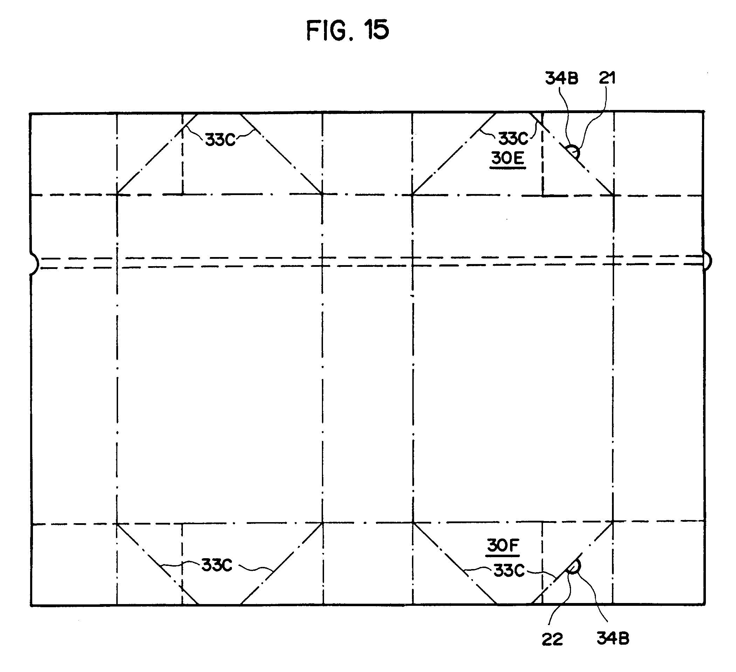

L'étiquette 3 de la figure 13 diffère des précédentes en ce qu'elle ne comporte plus que les deux découpes 34A qui définissent les saillies qui constitueront les languettes de déchirement 21 et 22. On remarque en outre que la forme de ces languettes est différente de celle des languettes représentées jusqu'alors; il ne s'agit que d'une modification montrant que les languettes en question peuvent être de n'importe quelle forme idoine. La suppression des autres découpes entraîne la formation des lignes de pliage à 45° 33C sur chacun des coins concernés de l'étiquette. Après assemblage, le paquet 1 aura l'aspect vu de dessus, comme représenté à la figure 14, son étanchéité étant encore améliorée par rapport aux paquets précédents, davantage de coins étant pliés en diamant.

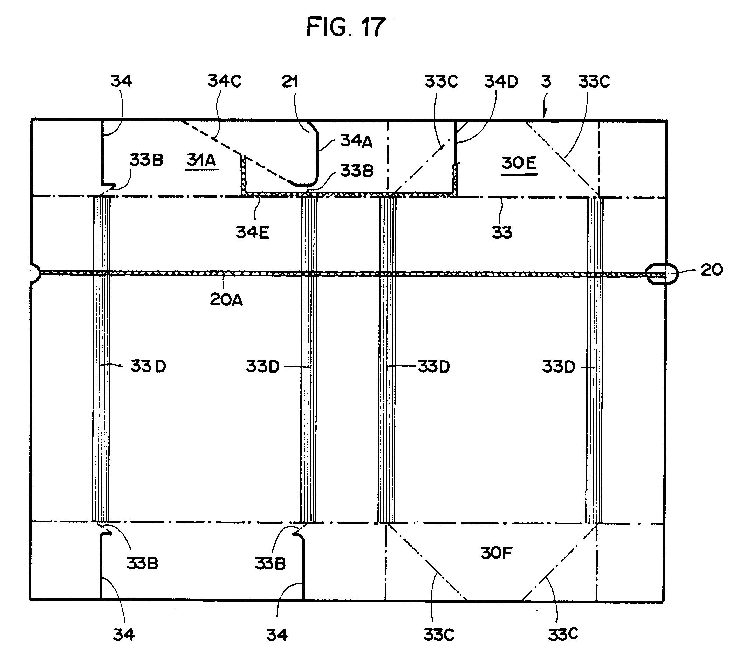

La figure 15 montre encore une autre forme d'exécution de l'étiquette 3 où les panneaux ne sont plus séparés par des découpes mais sont tous reliés par des lignes de pliage 33C comme sur la forme d'exécution précédente permettant le pliage en diamant de l'ensemble des panneaux formant les faces supérieure et inférieure, de la même manière qu'un paquet mou habituel. Une seule découpe 34B, ici en demi-lune, est faite sur le panneau 30E et éventuellement sur le panneau 30F, afin de constituer la ou les languettes de déchirement 21 et 22. De par la présence de lignes de pliage 33C sur chacun des coins du paquet, celui-ci est parfaitement étanche. Sa représentation, vu de dessus est comme sur la figure 16.

La figure 17 montre encore une autre forme d'exécution d'une étiquette 3. Elle se caractérise principalement par une confection particulière des lignes de pliage 33D correspondant aux arêtes latérales de l'emballage terminé. Pour cette forme d'exécution, les lignes de pliage 33D subissent aussi un moletage afin de diminuer la rigidité de l'étiquette à cet endroit. La largeur du moletage vaut environ le quart du périmètre d'une cigarette, de telle manière que, lorsque l'emballage est assemblé, le paquet 1 vu de dessus de la figure 18 présente ses quatre arêtes latérales en forme arrondie, épousant la forme intérieure donnée par les cigarettes. Les parties moletées des arêtes latérales peuvent elles aussi être recouvertes d'un laminage et/ou d'un laquage. De cette manière, il est possible de diminuer de quelques mm la longueur de l'étiquette 3 ce qui amène, vu les quantités considérables d'étiquettes en fabrication, à des économies substantielles de matière première, et contribuant aussi ainsi à diminuer les déchets. La languette d'arrachage 21 est aussi particulière; la découpe 34A se termine, comme les autres découpes 34 représentées sur la figure, par une amorce de ligne de pliage à 45° 33B en direction de l'extrémité de la ligne de pliage 33D qui lui est proche. Dans le prolongement de cette amorce de ligne de pliage 33B on a une ligne d'ouverture 34C à 45° aménagée dans le panneau 31A, cette ligne d'ouverture n'est pas nécessairement étanche vu que cette portion du panneau 31A superposera le panneau 30E après assemblage de l'emballage. Le dispositif est complété par une autre ligne d'ouverture 34E, comportant une portion superposée à une portion de la ligne de pliage 33 et deux portions d'extrémités, perpendiculaires à la précédente, une première portion d'extrémité rejoignant la ligne d'ouverture 34C et l'autre portion d'extrémité étant aménagée sur une portion de la largeur du panneau 30E et se terminant par une découpe 34D dans le reste de la largeur dudit panneau. L'utilisation de ce moyen d'ouverture du paquet 1 est compréhensible en regard de la figure 18 où le paquet vu de dessus est complété par une étiquette de garantie 11B du même type que celle des figures 1 et 2. en saisissant la languette 21, on effectue un mouvement qui déchire premièrement la ligne d'ouverture 34C, ce mouvement permettant de soulever la portion du panneau 30E qui la superpose, ce soulèvement étant facilité par la découpe 34D dans le panneau 30E, ensuite de quoi, l'arrachage des portions d'emballage peut se poursuivre grâce aux lignes d'ouverture moletées 34E aménagées sur le pourtour des portions à retirer. Une astuce supplémentaire de ce moyen d'ouverture vient de ce qu'il est possible de n'avoir qu'une ouverture réduite du paquet, la portion du panneau 31A disposée hors de la portion arrachée attenante à la languette 21 pouvant ne pas être directement enlevée. Comme on le voit sur la figure 18, la bande de garantie 11B est positionnée de manière à border les portions transversales de la ligne d'ouverture 34E, ce qui facilite encore son ouverture. Ainsi, la position des portions d'extrémités de la ligne d'ouverture 34E sur les panneaux 30E et 31A est déterminée par l'emplacement et les dimensions de la bande de garantie 11B. Il est évident qu'il est aussi possible de munir la fond du paquet 1 de moyens d'ouverture comme décrits ci-dessus. En ce qui concerne les autres particularités de cette étiquette, les découpes 34 sont faites comme expliqué en regard des figures 5C et 5D, les lignes de pliage 33C sur les panneaux 30E et 30F sont faites comme expliqué en regard de la figure 11 et la languette d'arrachage 20 agit sur une bandelette d'arrachage 20A constituée par moletage comme expliqué en regard de la figure 7.

Comme indiqué précédemment, sous réserve des moyens indiqués pour rendre étanches d'éventuelles lignes d'ouverture comportant des prédécoupes faites dans l'épaisseur de l'étiquette, celle-ci peut rester telle quelle, c'est-à-dire constituée uniquement d'une feuille de papier ayant déjà reçu ou recevant ultérieurement l'impression du logo de la marque de cigarettes ainsi que les indications figurant habituellement sur un paquet de cigarettes, ou alors être aussi recouvertes d'un enduit laminée et/ou d'un enduit de laquage.

Il est à remarquer que, comme il a été dit précédemment, les étiquettes selon l'une quelconque des formes d'exécution décrites peuvent être conçues sans création de déchets de coupe à la fabrication.

Les étiquettes mentionnées ci-dessus ont été décrites selon diverses formes ou variantes d'exécution des languettes d'arrachage, des lignes de pliage, des découpes et des lignes d'ouverture. Il est évident que ces diverses formes ou variantes d'exécution peuvent être combinées entre elles dans un seul type d'emballage.

Ainsi, par la conformation judicieuse d'une étiquette selon l'une ou l'autre des formes d'exécution décrites ci-dessus, il est possible d'obtenir un emballage pour un paquet de cigarettes ou de tout autre produit de l'industrie du tabac ne rencontrant pas les inconvénients des emballages connus et comportant en outre plusieurs avantages supplémentaires significatifs. Un emballage de ce type est particulièrement écologique dans la mesure où il emploie un minimum de matières premières, un seul type de matière, rendant ainsi son élimination après emploi plus facile, d'autant plus s'il est constitué en un matériau recyclable et/ou biodégradable, tout en garantissant une protection efficace de son contenu contre la lumière, le transfert d'humidité, la perte d'arôme ou de goût lors du stockage. Le prix de revient d'un tel emballage est généralement inférieur à celui d'un emballage de type connu. L'utilisateur rencontre lui aussi des avantages à utiliser un tel emballage puisque, tout en conservant les avantages des emballages de l'art antérieur, ce nouveau type d'emballage lui permet de choisir entre plusieurs manières d'ouvrir son paquet de cigarettes soit comme pour un paquet mou habituel ou comme pour un paquet dur, ou même lui permettant d'atteindre les cigarettes sans en toucher les filtres.

## Revendications

1. Emballage pour groupe (1) de produits de l'industrie du tabac, notamment pour groupe de cigarettes afin de former un paquet de type mou constitué de manière générale à partir d'une seule étiquette (3,10) comportant une pluralité de panneaux, formant les faces frontales (30A,30B), latérales (30C, 30D), d'extrémité supérieure (11;30E) et d'extrémité inférieure (12;30F) dudit paquet, ainsi que des panneaux de collage (31, 31A,31B,31C), et comportant un premier moyen d'ouverture constitué d'une languette d'arrachage (21;22) d'une portion prédécoupée (11A;12A) des panneaux (30E,31A;30F,31) formant une première de l'une desdites faces d'extrémité du paquet,
caractérisé en ce qu'
il comporte en outre au moins un autre moyen d'ouverture constitué soit:
d'une languette d'arrachage (22;21) d'une portion prédécoupée (12A,11A) des panneaux (30F,31;30E,31A) formant la face d'extrémité opposée à ladite première face d'extrémité
soit/et
d'une languette d'arrachage (20) d'une portion préaffaiblie des panneaux formant les faces frontales (30A,30B) et latérales (30C,30D,31C) du paquet.

2. Emballage selon la revendication 1, caractérisé en ce que ladite portion préaffaiblie des panneaux formant les faces frontales (30A,30B) et latérales (30C,30D,31C) du paquet est prédécoupée (36).

3. Emballage selon l'une des revendications précédentes, caractérisé en ce que l'un au moins des coins dudit emballage est constitué d'un pliage (33A,33B,33C) en diamant.

4. Etiquette (3) pour la confection d'un emballage selon l'une des revendications précédentes, caractérisée en ce qu'elle comprend au moins une découpe (34A,34B) définissant une saillie incorporée au corps de l'étiquette, afin de former une languette d'arrachage (21,22) d'une portion (11A,12A) des panneaux (30E,30F,31,31A,31B) formant la face supérieure (11) ou inférieure (12) du paquet.

5. Etiquette selon la revendication 4, caractérisée en ce qu'elle comprend une découpe d'une arête latérale d'un panneau latéral (30C) définissant une saillie afin de former une languette d'arrachage (20) d'une portion (13,20A) des panneaux formant les faces frontales (30A,30B) et latérales (30C,30D,31C) du paquet.

6. Etiquette selon l'une des revendications 4 ou 5, caractérisée en ce qu'elle comprend des lignes d'ouverture (34C,34E,35A,35B, 35C,36) pour chacune desdites saillies, lesdites lignes d'ouverture entourant les portions des panneaux à arracher.

7. Etiquette selon la revendication 6, caractérisée en ce que au moins une ligne d'ouverture est constituée par une ligne perforée.

8. Etiquette selon la revendication 7, caractérisée en ce que au moins une desdites lignes d'ouverture perforées est revêtue, sur au moins une couche de l'emballage, d'un enduit d'étanchéité (A).

9. Etiquette selon l'une des revendications 4 ou 5, caractérisée en ce que la majorité des fibres du matériau la constituant sont orientées selon une direction parallèle à la direction (B) d'arrachage desdites languettes (20,21,22).

10. Etiquette selon la revendication 6, caractérisée en ce que au moins une ligne d'ouverture (34C,34E,35A,35B,35C,36) est constituée par une diminution de l'épaisseur de ladite étiquette.

11. Etiquette selon la revendication 10, caractérisée en ce que la diminution d'épaisseur de l'étiquette est obtenue par une opération de moletage.

12. Etiquette selon l'une des revendications 6 à 11, caractérisée en ce qu'une bande collante (39A) comportant une bande de traction (39B) est placée sur l'envers d'au moins une portion d'emballage à arracher.

13. Etiquette selon l'une des revendications 4 à 12, caractérisée en ce qu'au moins une découpe (34) séparant un panneau formant face supérieure (30E) ou inférieure (30F) et un panneau de collage (31) ou séparant deux panneaux de collage adjacents (31,31A,31B) est effectuée sur seulement une portion de la ligne séparant les deux dits panneaux, l'autre portion de ligne étant constituée d'une amorce de ligne de pliage (33A), ladite amorce de ligne de pliage étant plus courte que ladite découpe.

14. Etiquette selon l'une des revendications 4 à 13, caractérisée en ce qu'au moins une découpe (34) séparant un panneau formant face supérieure (30E) ou inférieure (30F) et un panneau de collage (31) ou séparant deux panneaux de collage adjacents (31,31A,31B) est effectuée sur seulement une portion d'une ligne parallèle à la ligne séparant les deux dits panneaux, une amorce de ligne de pliage à 45° (33B) reliant l'extrémité de ladite découpe au point de rencontre de la ligne de pliage (33) séparant les panneaux des faces latérale et frontale (30A,30B,30C,30D,31C) adjacents aux panneaux séparés par ladite découpe et de la ligne de pliage (33) séparant lesdits panneaux séparés par ladite découpe desdits panneaux adjacents.

15. Etiquette selon l'une des revendications 4 à 14, caractérisé en ce qu'au moins une ligne séparant un panneau formant face supérieure (30E) ou inférieure (30F) et un panneau de collage (31) ou séparant deux panneaux de collage adjacents (31,31A,31B) est constituée en une première ligne de pliage (33), le panneau formant face supérieure (30E) ou inférieure (30F) et/ou le panneau de collage (31,31A) adjacent à un panneau de face latérale (30A,30B), comportant au moins une autre ligne de pliage à 45° (33C) partant du point de rencontre de la ligne de pliage (33) séparant les panneaux des faces latérale et frontale (30A,30B,30C,30D,31C) adjacents aux panneaux séparés par ladite première ligne de pliage (33) et de la ligne de pliage (33) séparant lesdits panneaux séparés par ladite première ligne de pliage (33) desdits panneaux adjacents.

16. Etiquette selon l'une des revendications 4 à 15 caractérisée en ce que les quatre arêtes latérales séparant les panneaux des faces latérales et frontales (30A,30B,30C,30D) sont moletées.

17. Etiquette selon l'une des revendications 4 à 16, caractérisée en ce qu'elle est revêtue d'un enduit laminé et/ou d'un enduit laqué.

18. Etiquette selon l'une des revendications 4 à 17, caractérisée en ce qu'elle est constituée en un matériau recyclable et/ou biodégradable.

19. Utilisation d'un emballage selon la revendication 1, avec un étui extérieur (15) rechargeable.

## Claims

1. Package for a group (1) of products of the tobacco industry, especially for a group of cigarettes in order to form a soft-type pack generally speaking formed from a single label or packaging blank (3, 10) comprising a plurality of panels, forming the frontal (30A, 30B), side (30C, 30D), top-end (11; 30E), and bottom-end (12; 30F) faces of said pack, as well as the gluing panels (31, 31A, 31B, 31C), and comprising a first opening means made up of a tongue (21; 22) for pulling away a pre-cut portion (11A; 12A) of the panels (30E, 31A; 30F, 31) forming a first of one of said end faces of the pack,
characterized in that
it further comprises at least another opening means made up either
of a tongue (22; 21) for pulling away a pre-cut portion (12A, 11A) of the panels (30F, 31; 30E, 31A) forming the end face opposite to said first end face
either/and
of a tongue (20) for pulling away a thickness-pre-reduced portion of the panels forming the front (30A, 30B) and side (30C, 30D, 31C) faces of the pack.

2. Package according to claim 1, characterized in that said thickness-pre-reduced portion of the panels forming the frontal (30A, 30B) and side (30C, 30D, 31C) faces of the pack is pre-cut (36).

3. Package according to one of the preceding claims, characterized in that at least one of the corners of said package is made up of a diamond-shaped folding (33A, 33B, 33C).

4. Label or packaging blank (3) for making a package according to one of the preceding claims, characterized in that it includes at least one cut (34A, 34B) defining a projection incorporated in the body of the label, in order to form a tongue (21, 22) for pulling away a portion (11A, 12A) of the panels (30E, 30F, 31, 31A, 31B) forming the top (11) or bottom (12) face of the pack.

5. Label or packaging blank according to claim 4, characterized in that it includes a cut of a side edge of a side panel (30C) defining a projection in order to form a tongue (20) for pulling away a portion (13, 20A) of the panels forming the frontal (30A, 30B) and side (30C, 30D, 31C) faces of the pack.

6. Label or packaging blank according to one of the claims 4 or 5, characterized in that it includes opening lines (34C, 34E, 35A, 35B, 35C, 36) for each of said projections, said opening lines surrounding the portions of the panels to be pulled away.

7. Label or packaging blank according to claim 6, characterized in that at least one opening line consists of a perforated line.

8. Label or packaging blank according to claim 7, characterized in that at least one of said perforated opening lines is covered, on at least one layer of the package, with a fluid-tightness coating (A).

9. Label or packaging blank according to one of the claims 4 or 5, characterized in that the majority of the fibers of the material constituting it are oriented in a direction parallel to the pulling-away direction (B) of said tongues (20, 21, 22).

10. Label or packaging blank according to claim 6, characterized in that at least one opening line (34C, 34E, 35A, 35B, 35C, 36) consists of a reduction of the thickness of said label.

11. Label or packaging blank according to claim 10, characterized in that the reduction of thickness of the label is obtained by a knurling operation.

12. Label or packaging blank according to one of the claims 6 to 11, characterized in that an adhesive strip (39A) comprising a traction strip (39B) is placed on the back of at least one package portion to be pulled away.

13. Label or packaging blank according to one of the claims 4 to 12, characterized in that at least one cut (34) separating a panel forming a top (30E) or bottom (30F) face and a gluing panel (31) or separating two adjacent gluing panels (31, 31A, 31B) is carried out on only a portion of the line separating the two said panels, the other line portion being made up of a folding-line start (33A), said folding-line start being shorter than said cut.

14. Label or packaging blank according to one of the claims 4 to 13, characterized in that at least one cut (34) separating a panel forming a top (30E) or bottom (30F) face and a gluing panel (31) or separating two adjacent gluing panels (31, 31A, 31B) is carried out on only a portion of a line parallel to the line separating the two said panels, a 45° folding-line start (33B) connecting the end of said cut to the point of encounter of the folding line (33) separating the panels of the side and frontal faces (30A, 30B, 30C, 30D, 31C) adjacent to the panels separated by said cut and of the folding line (33) separating said panels separated by said cut from said adjacent panels.

15. Label or packaging blank according to one of the claims 4 to 14, characterized in that at least one line separating a panel forming top (30E) or bottom (30F) face and a gluing panel (31) or separating two adjacent gluing panels (31, 31A, 31B) consists of a first folding line (33), the panel forming top (30E) or bottom (30F) face and/or the gluing panel (31, 31A) adjacent to a side face panel (30A, 30B), comprising at least one other 45° folding line (33C) starting from the point of encounter of the folding line (33) separating the panels of the side and frontal faces (30A, 30B, 30C, 30D, 31C) adjacent to the panels separated by said first folding line (33) and of the folding line (33) separating said panels separated by said first folding line (33) from said adjacent panels.

16. Label or packaging blank according to one of the claims 4 to 15, characterized in that the four side edges separating the panels of the side and frontal faces (30A, 30B, 30C, 30D) are knurled.

17. Label or packaging blank according to one of the claims 4 to 16, characterized in that it is covered with a laminated coating and/or with a lacquered coating.

18. Label or packaging blank according to one of the claims 4 to 17, characterized in that it is made up of a recyclable and/or biodegradable material.

19. Use of a package according to claim 1, with refillable outer case (15).

## Patentansprüche

1. Verpackung für eine Gruppe (1) von Produkten der Tabakindustrie, insbesondere für eine Gruppe von Zigaretten, zur Bildung eines Paketes des weichen Typs, im allgemeinen gebildet aus einem einzigen Zuschnitt (3, 10), welcher eine Mehrzahl von Feldern umfasst, die die Frontflächen (30A, 30B), Seitenflächen (30C, 30D), das obere Ende (11; 30E) und das untere Ende (12; 30F) sowie die Klebflächen (31, 31A, 31B, 31C) bilden, und die ein erstes Mittel zum Oeffnen umfasst, das aus einer Aufreisslasche (21, 22) eines vorgeschnittenen Teiles (11A; 12A) der Felder (30E, 31A; 30F, 31) gebildet ist, die eine erste von einer der genannten Endflächen der Verpackung bildet,
dadurch gekennzeichnet, dass
ausserdem mindestens ein weiteres Mittel zum Oeffnen vorgesehen ist, gebildet aus:
einer Aufreisslasche (22; 21) eines vorgeschnittenen Teiles (12A, 11A) der Felder (30F, 31; 30E, 31A), die die Endfläche bilden, die der genannten ersten Endfläche gegenüberliegt, und/oder
einer Aufreisslasche (20) eines vorgeschwächten Teiles der Felder, die die Frontflächen (30A, 30B) und Seitenflächen (30C, 30D, 31C) des Paketes bilden.

2. Verpackung nach Anspruch 1, dadurch gekennzeichnet, dass der genannte vorgeschwächte Teil der Felder, die die Frontflächen (30A, 30B) und Seitenflächen (30C, 30D, 31C) des Paketes bilden, vorgeschnitten (36) ist.

3. Verpackung nach einem der vorhergehenden Ansprüche, dadurch gekennzeichnet, dass mindestens eine der Ecken mit einer Diamantfalzung (33A, 33B, 33C) versehen ist.

4. Zuschnitt (3) für die Herstellung einer Verpackung nach einem der vorhergehenden Ansprüche, dadurch gekennzeichnet, dass er mindestens einen Schnitt (34A, 34B) aufweist, der einen Vorsprung definiert, der im Körper des Zuschnitts eingegliedert ist, um eine Aufreisslasche (21, 22) eines Teils (11A, 12A) der Felder (30E, 30F, 31, 31A, 31B) zu bilden, die die obere Fläche (11) oder untere Fläche (12) des Paketes bildet.

5. Zuschnitt nach Anspruch 4, dadurch gekennzeichnet, dass er einen Schnitt von einer seitlichen Kante eines Seitenfeldes (30C) aufweist, der einen Vorsprung definiert, um eine Aufreisslasche (20) eines Teils (13, 20A) der Felder zu bilden, die die Frontflächen (30A, 30B) und Seitenflächen (30C, 30D, 31C) des Paketes bilden.

6. Zuschnitt nach einem der Ansprüche 4 oder 5, dadurch gekennzeichnet, dass er Oeffnungslinien (34C, 34E, 35A, 35B, 35C, 36) für jeden der genannten Vorsprünge umfasst, und die genannten Oeffnungslinien die Teile der Felder zum Aufreissen umgeben.

7. Zuschnitt nach Anspruch 6, dadurch gekennzeichnet, dass mindestens eine Oeffnungslinie als pertorierte Linie ausgebildet ist.

8. Zuschnitt nach Anspruch 7, dadurch gekennzeichnet, dass mindestens eine der perforierten Oeffnungslinien auf wenigstens einem Verpackungsüberzug mit einer dichtenden Schicht (A) abgedeckt ist.

9. Zuschnitt nach einem der Ansprüche 4 oder 5, dadurch gekennzeichnet, dass eine Mehrheit der Fasern des Materials, wodurch der Zuschnitt gebildet ist, in einer Richtung ausgerichtet sind, die parallel zur Aufreissrichtung (B) der genannten Laschen (20, 21, 22) sind.

10. Zuschnitt nach Anspruch 6, dadurch gekennzeichnet, dass mindestens eine Oeffnungslinie (34C, 34E, 35A, 35B, 35C, 36) durch eine Verminderung der Dicke des genannten Zuschnitts gebildet ist.

11. Zuschnitt nach Anspruch 10, dadurch gekennzeichnet, dass die Verminderung der Dicke des Zuschnitts durch einen Prägevorgang erhalten wird.

12. Zuschnitt nach einem der Ansprüche 6 bis 11, dadurch gekennzeichnet, dass ein Klebeband (39A), das ein Ziehband (39B) aufweist, auf der Rückseite von mindestens einem Teil der Verpackung zum Aufreissen angeordnet ist.

13. Zuschnitt nach einem der Ansprüche 4 bis 12, dadurch gekennzeichnet, dass mindestens ein Schnitt (34), der ein die obere Fläche (30E) oder untere Fläche (30F) bildendes Feld und ein Klebfeld (31) teilt oder zwei angrenzende Klebfelder (31, 31A, 31B) teilt, nur auf einem Teil der Linie angebracht ist, die die genannten Felder teilt, und der andere Teil der Linie als Anfang einer Falzlinie (33A) ausgebildet ist und der genannte Anfang der Falzlinie kürzer ist als der genannte Schnitt.

14. Zuschnitt nach einem der Ansprüche 4 bis 13, dadurch gekennzeichnet, dass mindestens ein Schnitt (34), der ein die obere Fläche (30E) oder untere Fläche (30F) bildendes Feld und ein Klebfeld (31) teilt oder zwei angrenzende Klebfelder (31, 31A, 31B) teilt, nur auf einem Teil einer Linie angebracht ist, die parallel zur Linie ist, die die beiden genannten teilt, und ein Anfang einer um 45° geneigten Falzlinie (33B), die das Ende des genannten Schnittes mit dem Treffpunkt der Falzlinie (33), die die Felder der Seitenflächen und Frontflächen (30A, 30B, 30C, 30D, 31C) teilt, die an die durch den genannten Schnitt geteilten Felder angrenzen und der Falzlinie (33) verbindet, welche die genannten geteilten Felder durch den genannten Schnitt der genannten angrenzenden Felder teilt.

15. Zuschnitt nach einem der Ansprüche 4 bis 14, dadurch gekennzeichnet, dass mindestens eine Linie, die ein Feld, das eine obere Fläche (30E) oder eine untere Fläche (30F) bildet, und ein Klebefeld (31) teilt, oder zwei angrenzende Klebefelder (31, 31A, 31B) teilt, als eine erste Falzlinie (33) ausgebildet ist, und das Feld, das die obere Fläche (30E) oder untere Fläche (30F) und/oder das Klebefeld (31, 31A), das an ein Feld der Seitenfläche (30A, 30B) angrenzt, bildet, mindestens eine andere um 45° geneigte Falzlinie (33C) aufweist, die vom Treffpunkt der Falzlinie (33) ausgeht, welche die Felder der Seitenflächen und Frontflächen (30A, 30B, 30C, 30D, 31C) teilt, die an die Felder angrenzen, die durch die genannte erste Falzlinie (33) und der Falzlinie (33) geteilt sind, die die genannten durch die genannte erste Falzlinie (33) der genannten angrenzenden Felder geteilten Felder teilt.

16. Zuschnitt nach einem der Ansprüche 4 bis 15, dadurch gekennzeichnet, dass die vier seitlichen Vorsprünge, die die Felder der Seitenflächen und Frontflächen (30A, 30B, 30C, 30D) teilen, geprägt sind.

17. Zuschnitt nach einem der Ansprüche 4 bis 16, dadurch gekennzeichnet, dass er durch einen laminierten Ueberzug und/oder einer Lackschicht überzogen ist.

18. Zuschnitt nach einem der Ansprüche 4 bis 17, dadurch gekennzeichnet, dass er aus einem rezyklierbaren und/oder biologisch abbaubaren Material besteht.

19. Verwendung einer Verpackung nach Anspruch 1 mit einer wieder ladbaren äusseren Hülle.
